(19) Europäisches Patentamt
European Patent Office
Office européen des brevets

(11) **EP 2 982 637 B1**

(12) **EUROPEAN PATENT SPECIFICATION**

(45) Date of publication and mention of the grant of the patent:
**04.04.2018 Bulletin 2018/14**

(51) Int Cl.:
**B66D 1/52** *(2006.01)*          **E21B 19/00** *(2006.01)*
**F16F 9/06** *(2006.01)*

(21) Application number: **14180367.6**

(22) Date of filing: **08.08.2014**

(54) **Method for reduction of lifting tension on a load**

Verfahren zur Reduzierung der Hubspannung auf einer Last

Procédé de réduction de tension de levage sur une charge

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**10.02.2016 Bulletin 2016/06**

(73) Proprietor: **Ernst-B. Johansen AS**
**3960 Stathelle (NO)**

(72) Inventor: **Bergem, Oddbjørn**
**N-3214 Sandefjord (NO)**

(74) Representative: **Onsagers AS**
**P.O. Box 1813 Vika**
**0123 Oslo (NO)**

(56) References cited:
**GB-A- 2 503 063          US-A- 3 842 603**
**US-A1- 2008 251 980**

• **BOB WILDE ET AL: "Subsea Heave Compensators", DEEP OFFSHORE TECHNOLOGY - 2009, 1 January 2009 (2009-01-01), - 5 February 2009 (2009-02-05), pages 1-14, XP055333100, US**

## Description

### Field of technology

The present invention relates to a method for dampening heave movements during heavy lifts under the final phase of the lifting operation, and to reduction of the lifting force when placing the load on a solid foundation.

### Background

Offshore installations, such as offshore windmills, various process modules for subsea oil and gas exploration etc., are in many cases deployed by being transported on seagoing transport vessels out to the placement location, and thereafter lifted off the transport vessel by an on-board crane or crane located on another vessel and lowered into the sea, either to be located on the surface as a floating installation or lowered into the water to be installed on the sea floor.

The deployment, more precise, the lifting operation is sensitive to the weather conditions since, during suspended loads offshore, sea induced movements of the vessel will quickly become problematic since the movements of the vessel and thereby the crane results in variations in the available lifting height between the sea surface and the crane's point of suspension, and because the cyclic wave movements results in periodic accelerated movements of the suspended load.

This is particularly problematic for lifting of heavy cargoes and/or huge constructions, since the accelerated movements of the suspended load induces huge tension forces/strains on the crane and suspension points in the load and danger of re-contact between the load and the transport vessel which may damage the suspended load. After the load has obtained contact with the sea-water, the waves will become problematic since the sea-water viscosity and own weight retains the load/construction with enormous power when the movement of the vessel tries to increase the distance between sea surface and the suspension point of the crane.

Thus, to avoid costly waiting periods where the transport vessel is laying inactive waiting for improved wave conditions allowing such deploying operations, it is a desire for amending these wave induced problems allowing performing the deployment in less favourable weather conditions. The reduction in costs, due to saved waiting times, increases with increased "weather window". It is thus a need for compensating the variation in available lifting height between the point of suspension of the crane and the surface of the sea due to wave induced movements of the lifting vessel to avoid detrimental tension forces on the crane, the suspended load, or re-contact between the vessel and load.

## Prior art

It is known that the problems associated with unintended movements of the crane (and the crane vessel) and subsequent powerful variations in the tension forces on the crane during the lift of heavy loads may be alleviated by employing a heave compensator which, in one end is attached to the clevis on the lifting cable of the crane and in the other end to the suspension point of the load. A heave compensator is a mechanism having a spring and/or dampening effect due to being able, when needed, to prolong or shorten the distance between the suspension point of the crane and the suspension point of the load, and thus substantially reduce the variations of the tension forces due to the crane's unintended movements.

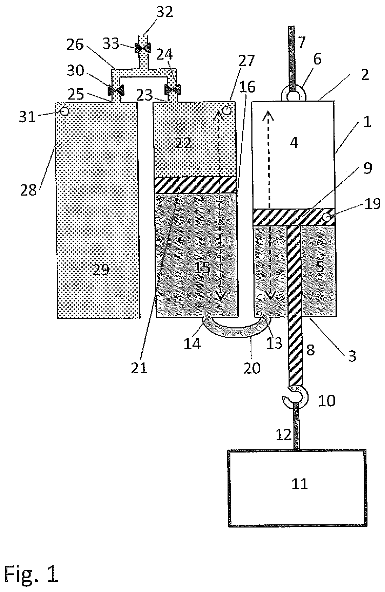

From US 3 785 445 it is known a combined heave compensator for the drill string and a riser tensioner for a floating drilling vessel. The heave compensator is schematically shown in Fig. 2 of US 3 785 445, and comprises a heave compensator cylinder 10 with piston rod 18 connected to the end of the drill string DS enabling the piston of the cylinder to absorb relative vertical movements between the drill string DS and the vessel VS (see Fig. 1 of US 3 785 445). The riser DR is connected to a set of stretching cylinders 26 by cables being stretched by piston 28. The stretch is obtained by the part of the inner space of cylinder 26 below piston 28, chamber 12, is pressurised by a liquid by a piston cylinder having a liquid/gas-piston supplying pressurised liquid to chamber 12 via line 40. The pressure is obtained by gas accumulator 52 supplying pressurised gas to chamber 43 in the piston cylinder. The upper chamber in stretching cylinders 26 is also filled with liquid and is fluidly connected to chamber 12 of the heave compensator cylinder 10 via line 30 with an isolation valve 32 and safety valve 34. By interchanging liquid between chamber 12 in the heave compensating cylinder and upper chamber in the stretching cylinders 26, the pistons 18 and 28 in the heave compensating cylinder 10 and the stretching cylinders 26, respectively, obtain a motion pattern where every piston 18, 26 are moved in the same phase. Thus, a simultaneous compensation of the tension forces on the drill string DS and an adjustment of the stretching of the riser DS is obtained in accordance with the vertical movements of the drilling vessel DV due the waves.

From US 3 793 835 it is known a heave compensator for the drill string of floating droll vessels comprising two heave compensating cylinders 13 with piston 14 connected to the drill string, and where piston 14 separates the inner space of cylinders 13 into an upper chamber and a lower liquid filled chamber. The lower liquid filled chamber is fluidly connected to the liquid phase 15 of liquid/gas accumulator 17 via line 18, 20 with cut-off valve 19. The gas phase of liquid/gas accumulator 17 is via line branched line 31 with cut-off valves 32 and 33, fluidly connected to a battery of gas tanks 30, 30a. The pressure of the system is pre-set according to the expected weight on the drill string. By valves 32 and 33, it is possible to vary the number of gas tanks to increase or reduce the available expansion volume to the gas phase, and thus adjusting the dampening characteristics of the heave compensator.

From US 3 842 603 it is known a heave compensator intended for lifting loads by a crane from a floating vessel and lowering the load into the sea, which comprises a heave compensating piston cylinder 12 divided by piston 16 into an upper chamber 19 and a lower chamber 18. Piston 16 is connected to the load via piston rod 17. The lower chamber 18 is filled with liquid and is fluidly connected to the liquid phase of a first liquid/gas accumulator 22 via conduit 21 having a valve 43. Cut-off valve 43 is controlled manually by switch 53 which electrically controls the actuator 44, and may vary between closed and open position. The upper gas filled chamber in the first liquid/gas accumulator 22 is through conduit 24 fluidly connected to a gas supply conduit 28 having an electrically activated cut-off valve 26, and which is connected to a reservoir 31 for pressurised gas, and fluidly connected to gas exit 34 having electrically controlled cur-off valve 32. It is thus possible to increase the gas pressure in the gas filled chamber in the first liquid/gas accumulator 22 by opening valve 26 and maintain valve 32 closed, or the opposite, to reduce the gas pressure by closing valve 26 and opening valve 32, and in this manner, increase or reduce the pressure of the liquid of the liquid phase pressing against the piston 16 in chamber 18. The upper chamber 19 of piston cylinder 12 is also filled with liquid and is fluidly connected to a liquid phase 38 of a second liquid/phase accumulator 37 via conduit 36 having an orifice 41. The upper gas filled chamber in the second accumulator 37 is equipped with two pressure sensitive switches 59 and 62, which are electrically connected to electric actuator 27 of valve 26 and electric actuator 33 of valve 32. Pressure sensitive switch 59 will engage electric actuator 27 if the pressure in the upper gas filled chamber of the second accumulator becomes lower than a pre-set threshold value, and thus, pressurised gas from reservoir 31 begins to flow into accumulator 22, which has the effect of increasing the pressure in the liquid in the chambers 23 and 18 until piston 16 is moved upwards in cylinder 12, and thus reducing the volume of chamber 19 which again presses liquid into the first accumulator 37 causing an increase in the upper gas filled chamber of the first accumulator until the pressure regains the preset threshold value. Then the pressure sensitive switch will engage the electric actuator 27 to close the gas inlet 28 of the first accumulator. In this manner, the position of piston 16 is automatically readjusted if the load drags it tom much downwards in the cylinder 12. Pressure sensitive switch 62 will engage the electric actuator 33 if the pressure in the upper gas filled chamber of the second accumulator 37 exceeds a pre-set threshold value (as a consequence of the piston having moved too far up in the cylinder 12) such that the gas exit 34 is opened to lower the pressure in the accumulator 22 and thus allow the load to drag the piston 16 a distance further down in cylinder 12 and the pressure in the upper gas filled chamber of the second accumulator to regain its threshold value. Then switch 62 will engage electric actuator 33 to close the gas exit. In this manner, a heave compensator with automatic correction of the piston position in the heave compensating cylinder is obtained.

"Subsea Heave Compensators" regards a presentation of a subsea compensation system from Inter-Moor, the InterMoor Subsea Compensation System (ISCS), presented by Bob Wilde and Jake Ormond on the conference "Deep Offshore Technology" in 2009. The InterMoor Subsea Compensation System, being an installation tool, is a vertical in-line passive heave compensator designed to compensate (i.e. minimize) heave during sensitive installation of subsea equipment in an offshore environment. The ISCS uses the principles of spring isolation to generate a net heave compensation or spring isolation effect, where pressure balancing is used to eliminate the depth effect. The ISCS comprises a primary accumulator and two additional Air Pressure Vessels (APV). Furthermore, a compensating cylinder is added to the tool to eliminate the depth effect. The compensating cylinder uses the piston area ratios to provide a precise amount of back pressure (at any given depth) on the low-pressure side of the hydraulic cylinder to offset the load from the high pressure cylinder rod side caused by the external hydrostatic pressure.

When deploying offshore installations and other heavy and/or voluminous objects from floating vessels, there is a need for a heave compensator which may fully automatic rectify variations in the loads and change the dampening characteristics in order to maximise the compensating abilities during the different phases of the lifting deployment, and in this manner increase the weather window allowing performing deployment of installations offshore from floating vessels. It is further an advantage that the heave compensator has a simple compact design, and that the heave compensator may function without knowing in advance the exact weight of the load and/or its buoyancy when lowered into the sea.

## Objective of the invention

The objective of the present invention is thus to provide a method for automatic regulation of the available stroke length of a heave compensating device which automatically adjusts to variations in the sensible weight of the load, and which may change the dampening force after first contact between the load and the underlay to prevent re-lifting of the load from the underlay.

## List over figure

Figure 1 is a schematic drawing seen from a side of a heave compensating device suited for performing the method according to the first aspect of the invention.

**Description of the invention**

The present invention is based on the realisation that heave compensating devices comprising a length extension device with a hydraulic piston attached to the load and an upper vacuum chamber and a lower liquid filled chamber separated by the piston, a gas accumulator with an upper gas filled chamber and a lower liquid filled chamber separated by a second piston, where the liquid filled chambers of the length extension device and the gas accumulator are fluidly connected to each other, and a gas tank fluidly connected to the upper gas filled chamber of the gas accumulator, constitutes a simple and compact construction which may automatically adjust the stroke length during the lift and which easily may prevent the load from being lifted by heave movements and thereafter banging onto the solid underlay at the final stage of a lifting operation where a heavy load is to be deployed on a solid underlay.

In a first aspect, the present invention relates to a method for reducing the lifting force during the lowering of a load onto an underlay by a lifting device, wherein the method comprises in successive order:

A) utilising a heave compensating device comprising:

- a length extension device (1) having an upper (2) and a lower end (3) and which has an upper vacuum chamber (4) and a lower liquid filled chamber (5) due to a slidable piston (9) having a piston rod (8) which stretches through the lower liquid filled chamber (5) and further out a distance through a fluid tight opening in the lower end of the length extension device (1) and ends in a releasable attachment device (10), and
- an elongated gas accumulator (16) having an upper chamber (22) and a lower liquid filled chamber (15) divided by a slidable piston (21), and where the lower liquid filled chambers (5, 15) of the length extension device (1) and the gas accumulator (16) are fluidly connected to each other by a liquid transferring device (20), and where the upper chamber (22) of the elongated gas accumulator (16) has a, with a first valve (24), adjustable gas outlet (23), and
- a gas tank (28) having an expansion chamber (29) fluidly connected to the upper chamber (22) of the elongated gas accumulator (16) by a, with a second valve (30), adjustable gas outlet (25), where the gas outlet (25) of the expansion chamber (29) of the gas tank (28) is fluidly connected to the gas outlet (23) of upper chamber (22) of the elongated gas accumulator (16) by a gas transferring device (26), and
- a, with a third valve (33), adjustable gas outlet (32) to the environment fluidly connected to the gas transferring device (26),

B) introducing a sufficient amount of gas into the expansion chamber (29) of the gas tank (28), and introducing a sufficient amount of gas into the upper chamber (22) of the elongated gas accumulator (16) to form a gas pressure which at least is able to obtain an intended equilibrium position of the piston (9) of the length extension device (1) when the full sensible weight of the load (11) is pulling on the piston rod (8), and thereafter closing all gas outlets (23, 25, 32) by closing the first (24), second (30) and third (33) valve,
C) attaching the upper end of the length extension device (1) to the lifting device (7) and the load (11) to the attachment device (10) of the piston rod (8),

characterised in that
the method additionally comprises the following step, when reducing the lifting force is to be obtained:

M) opening for gas flow through the gas transferring device (26) between the upper chamber (22) of the elongated gas accumulator (16) and the expansion chamber (29) of the gas tank (28) such that the gas pressure of these chambers (22, 29) are equalised.

The weight of the load (11) tends to pull the piston (9) towards the lower end of the length extension device (1) when the load (11) is suspended in the piston rod (8). As long as the valve on the liquid transferring device is open, a sufficient amount of gas to set up a gas pressure in the upper chamber (22) of the elongated gas accumulator (16) which is at least equal to the pressure of the liquid in the liquid filled second chamber (22) arising from the loads (11) pull on the first piston (9), is required to counter this movement.

The term "sufficient amount of gas" is in this context to be understood as enabling the heave compensating device to compensate for heave movements during the lift, that is, the upper chamber (22) of the elongated gas accumulator (16) must be supplied with at least the amount of gas which gives a gas pressure able to at least obtain the intended equilibrium position of the piston (9) of the length extension device (1) when the full weight of the load (11) is pulling in the piston rod (8). The sufficient amount gas in the expansion tank (29) of the gas tank (28) depends on the mass of the load (11), the Response Amplitude Operator (RAO) of the vessel, and the characteristics of the crane, and needs to be determined for each lifting operation. However, this determination is a task within the ordinary skills of a person skilled in the art.

For the expansion chamber (29) of the gas tank (28), the sufficient amount of gas depends on which functionality the heave compensating device is intended to exhibit. If it is only to exhibit compensation for heave movements during the lift and landing compensation at the lowering of the load (11) onto the ground at the end of the lifting operation, the pre-storing of gas in the expansion chamber (29) of the gas tank (28) may advantageously result in a lower gas pressure in the expansion chamber (29) than in the upper chamber (22) of the elongated gas accumulator (16). On the other hand, if the gas tank (28) is also to function as a gas storage for quick lift or raising the equilibrium position of the piston (9) of the length extension device (1), it is advantageous to pre-store gas in the expansion chamber (29) of the gas tank (28) to obtain a higher gas pressure than in the upper chamber (22) of the gas accumulator (16). The sufficient amount of gas needs to be determined for each lifting operation, and is a task within the ordinary skills of a person skilled in the art.

By pre-setting a lower gas pressure in the expansion chamber (29) of the gas tank (28) than the gas pressure arising in the upper chamber (22) of the gas accumulator (16) when the full weight of the load (11) is pulling the piston (9) of length extension device (1), the heave compensating device may rapidly and securely reduce the pulling force between the piston of length extension device (1) and the load after the first contact between the load (11) and the underlay is obtained by simply opening for gas through-flow between the upper chamber (22) of the elongated gas accumulator (16) and the expansion chamber (29) of the gas tank (28). This results in a substantially higher volume for the gas in the upper chamber (22) of the elongated gas accumulator (16) to distribute itself, and will thus flow out of the upper chamber (22) of the gas accumulator (16) such that the gas pressure is reduced. The pressure in the liquid pushing on the piston (9) of the length extension device (1) is thus also reduced, such that the pulling force of the piston (9) towards the load (11) is reduced accordingly. Thus it is ensured that if a heave movement increases the distance between the suspension point of the lifting device and the underlay, the movement is compensated by an extension of the length extension device (1) with a pulling force between the piston (9) and load (11) unable to lift up from the underlay, and result in damaging or exposing the load (11) to unacceptable impact forces when the heave movement enters its opposite phase which reduces the distance between the suspension point of the lifting device and the underlay.

Alternatively, in cases where it is desirable to pre-store sufficient amounts of gas in the gas tank (22) to obtain a higher gas pressure than the static equilibrium pressure of the gas accumulator (16) when the full weight of the load is pulling the piston of length extension device (1), such as i.e. when a quick lifting function at the initial phase of the lift is desired, the method according to the first aspect of the invention may advantageously also comprise a step for preparing the reduction of the lifting force.

The method according to the first aspect of the invention may advantageously, in a second aspect, comprise preparing the reduction of the lifting force by additionally including the following steps which are executed after step C) and before step M): L) preparing the reduction of the lifting force by executing the following sub-steps i) to iii):

i) measuring the pressure, $p_k^{acc}$, of the gas in the upper chamber (22) of the gas accumulator (16) when the load (11) is lifted above the underlay,

ii) setting the desired pressure, $p_{sp}^{exp}$, in the expansion chamber (29) of the gas tank (28) to

$$p_{sp}^{exp} = f \cdot p_k^{acc},$$

where $f \in \ <0,1>$, and thereafter

iii) lowering the gas pressure in the expansion chamber (29) of the gas tank (28) to the desired gas pressure, $p_{sp}^{exp}$.

In the method according to the second aspect of the invention, the necessary amounts of gas being supplied to the expansion chamber (29) of the gas tank (28) and to the upper chamber (22) of the gas accumulator (16) in step B) is such that the expansion chamber (29) of the gas tank (28) has stored gas at a higher pressure than the upper chamber (22) of the gas accumulator (16),. i.e. $p_{sp}^{exp} > p_{sp}^{acc}$. The supply of gas may in this case advantageously be at least sufficient to, when the gas is allowed to flow from the expansion chamber (29) of the gas tank (28) into the upper chamber (22) of the gas accumulator (16), that a static equilibrium pressure is obtained in the upper chamber (22) of the gas accumulator (16) when the piston of the length extension device (1) is pushed up to a relatively short distance below the upper end of the length extension device (1).

In another embodiment of the method according to the second aspect of the invention, the method may additionally comprise in step L) to await reception of a signal to initiate the preparation of the reduction of the lifting force before sub-steps i) to iii) are executed, and in step M), to await reception of a signal to execute the reduction of the lifting force before opening for gas through-flow.

The signal for initiating the preparation of the reduction of the lifting force and the signal to execute the reduction of the lifting force may advantageously be manually transferred from an operator to ensure that the reduction of the lifting force occurs at the right timing in accordance with the phases of the lifting operation. The signal may be an acoustic, electric or electromagnetic signal transferred by wire, wire-less, or by optical fibre a control and regulation unit of the heave compensation device.

The measuring of the pressure in the upper chamber (22) of the gas accumulator (16) and/or the expansion chamber (29) of the gas tank (28) may be obtained by using one or more pressure sensors of any suited type which is located in the respective chamber.

The desired gas pressure in the expansion chamber (29) of the elongated gas tank (28) must necessarily be lower than the gas pressure in the upper chamber (22) of the gas accumulator (16) in order to result in a reduction in the pulling force by opening for free through-flow of the gas between the chambers. How huge the desired pressure reduction should be depends on the tolerances of the load (11) and/or lifting device for rapid changes in the stretching forces, how large heave movements which are to be compensated etc. In general, the reduction should be as small as possible in order to avoid exposing the lifting device and/or the load too heavy strains by the reduction of the lifting force, and at the same time sufficiently large to avoid a heave movement form lifting the load up from the underlay. In practice, the factor *f* may advantageously be in one of the ranges; from 0.5 to 0.95, from 0.6 to 0.9, or from 0.7 to 0.8.

When the desired pressure in the expansion chamber (29) of the gas tank (28) is determined, the adjustment of the gas pressure to the desired pressure be obtained by continuously measuring the pressure the pressure $p_k^{exp}$, in the expansion chamber (29) of the gas tank (28), and thereafter opening for gas trough-flow through the gas outlet (25) of the expansion chamber (29) of the gas tank (28) and further out to the environment through the gas outlet to the environment to effect a discharge of gas from the expansion chamber (29) of the gas tank (28) out to the surroundings of the heave compensating device and closing both gas outlets for gas through-flow when $\left| p_{sp}^{exp} - p_k^{exp} \right| < p_{err}^{exp}$, where $p_{err}^{exp}$ is a predetermined error margin from the desired pressure in the expansion chamber (29) of the gas tank (28). The error margin, $p_{err}^{exp}$, depends on the tolerances of the load and the lifting device for sudden changes in the stretching forces between the load and the lifting device, the weight of the load etc. In practice, the error margin, $p_{err}^{exp}$, may advantageously be in one of the ranges; from $0.1 \cdot 10^5$ to $2 \cdot 10^5$ Pa, from $0.1 \cdot 10^5$ to $1 \cdot 10^5$ Pa, from $0.1 \cdot 10^5$ to $0.5 \cdot 10^5$ Pa.

In order to prevent a to sudden fall in the stretching forces during the reduction of the lifting force, it may advantageously be applied a by-pass conduit over the first valve of the gas outlet (23) of the upper chamber (22) of the gas accumulator (16) which only allows restricted through-flow of the gas by a pressure compensating valve etc. By maintaining the first valve (24) closed until the pressure between the upper chamber (22) of the elongated gas accumulator (16) and the expansion chamber (29) of the gas tank (28) is equalised within an acceptable pressure difference, the first valve (24) may be opened to allow full gas through-flow and in this manner ensuring that heave movements is effectively compensated without too strong lifting forces on the load (11). It may also be applied a by-pass conduit with pressure compensating valve across the second valve (30) on the gas outlet (25) of the expansion chamber (29) of the gas tank (28) and/or across the third valve (33) of the gas outlet to the surroundings to ensure avoiding too rapid pressure changes in the heave compensating device. By-pass conduits with pressure compensating valves are advantageous at heavy lifts where the gas pressure in the upper chamber (22) of the gas accumulator (16) may arise into a few hundred atmospheres pressure.

As long as the load is freely suspended, i.e. lifted up from the underlay, the lifting device (7) and the load (11) may be exposed to varying stretching forces due to heave movements. These stretching forces should be reduced when lifting large and heavy objects by use of a heave compensating device. The heave compensating effect of the heave compensating device is associated to the ability of the slide-able piston to move inside the length extension device (1), which in this example embodiment is a result of a piston cylinder and the complementary pressure forces arising inside the unit and acts on the piston as a consequence of its movement. When the piston is moved downwards in the cylinder of the length extension device (1), liquid will flow out of the first liquid filled chamber and into the second liquid filled chamber, and thus press the slidable piston of the elongated gas accumulator (16) upwards such that the volume of the gas filled chamber of the gas accumulator (16) becomes reduced. The opposite movement of the piston causes liquid to flow into the first liquid filled chamber, which in a similar manner, results in an increase of the volume of the gas filled chamber (22) of the gas accumulator (16).

Due to the compression resistance of the gas, the gas will exhibit a counter-acting force on the slide-able piston when it moves downwards which increases with increasing compression degree/stroke length. At the opposite movement of the piston, when it moves upwards, the volume of the gas will decrease such that its counter-force against the piston diminishes with the stroke length of the piston. Together this results in a springy effect on the piston (both in the gas accumulator and in the length extension device) which is proportional to the stroke length from its equilibrium position.

A gas changing its volume under adiabatic or close to adiabatic conditions will change its temperature and pressure according the gas equation of state. Thus, by measuring the pressure and/or the temperature of the gas in the upper gas chamber, it becomes possible if the amount of present gas is known, to determine the volume of the chamber, or if the volume of the chamber (the position of the slide-able piston) is known, the amount of gas may be determined from the knowledge of the pressure and temperature of the gas. The latter may be utilised for automatically regulation of the stroke length of the piston of the length extension device without knowing the exact weight of the load, by determining the actual equilibrium position of the piston and thereafter how the equilibrium position needs to be adjusted in order to obtain an equilibrium position of the piston being approximately in the middle of the inner space of the length extension device. And then determine how much gas which eventually must be discharged from the upper chamber of the gas accumulator to obtain the desired equilibrium position of the piston.

The method according to the second aspect of the invention may advantageously, in an example embodiment, additionally comprise an automatic adjustment of the available stroke length during the lift by additionally including the following steps which are executed after step C) and before step L):

G) measuring the position, $S_0$, of the piston (9) of the length extension device (1),

H) measuring the pressure and temperature of the gas inside the upper chamber (22) of the gas accumulator (16), and utilise a gas equation of state and the actual equilibrium position, $S_0$, to determine the amount of gas, $m_0^{acc}$, present in the chamber,

I) determining thereafter the amount of gas, $m_{sp}^{acc}$, required in the upper chamber (22) of the gas accumulator (16) to achieve the intended equilibrium position, $S_p$, of the piston, and

J) if there is to much gas in the upper chamber (22) of the gas accumulator (16), discharge from the upper chamber (22) of the gas accumulator (16) until the desired amount of gas, $m_{sp}^{acc}$, is obtained, or

K) if there is to little gas in the upper chamber (22) of the gas accumulator (16), transfer gas from the expansion chamber (29) of the gas tank (28) until the desired amount of gas, $m_{sp}^{acc}$, is obtained.

The discharge of gas from the upper chamber (22) of the gas accumulator (16) may i.e. be obtained by opening the gas outlet to the upper chamber (22) of the gas accumulator (16) and the gas outlet to the surroundings and continuously measuring the pressure, $p_k^{acc}$, and the temperature, $T_k^{acc}$, of the gas in the upper chamber (22) of the gas accumulator (16), and employing these measured values, $p_k^{acc}$, and, $T_k^{acc}$, in the gas equation of state to continuously determining the amount of gas, $m_k^{acc}$, present in the upper chamber (22) of the gas accumulator (16), and for continuously determining $\Delta m_{sp} = m_k^{acc} - m_{sp}^{acc}$. When $|\Delta m_{sp}| < m_{err}$, where $m_{err}$ is a predetermined error margin for amount of gas, the desired gas pressure in the upper chamber (22) of the gas accumulator (16) and the gas outlets may be closed. A similar method may be applied when it is needed to supply gas to the upper chamber (22) of the gas accumulator (16), by continuously measuring the pressure and the temperature of the gas in the chamber and continuously determining $\Delta m_{sp} = m_k^{acc} - m_{sp}^{acc}$, but keeping the gas outlet to the surroundings closed and instead opening the gas outlet to the expansion chamber (29) of the gas tank (28) as long as necessary for supplying gas to the upper chamber (22) of the gas accumulator (16). The gas outlet (23) of the upper chamber (22) of the gas accumulator (16) is in this case opened and closed simultaneously as the gas outlet (25) to the expansion chamber (29) of the gas tank (28) is opened and closed.

The term "continuously measuring" as used in this context is not to be understood in the mathematical sense of the term as a consecutive measurement without the slightest interruption. Continuous as used in this context means a satisfactorily tightly connected series of measurements made at sufficiently small intervals to form a timely correct and representative picture of the variation of the variable being measured. How close the point measurements/registrations need to be performed to obtain this, depend on how rapidly i.e. the pressure or temperature changes in the gas phases of the heave compensating device.

The automatic adjustment of the available stroke length may advantageously be initiated manually by an operator which transmits an acoustic, electric or electromagnetic signal by wire-less, wire, or by optical fibre a control and regulation unit of the heave compensation device. After the initiating signal is sent, the process is fully automatic and independent upon the mass of the load as long there is sufficient gas stored in the expansion chamber.

The measurement of the pressure and temperature in the upper chamber (22) of the gas accumulator (16) and/or the expansion tank (29) of the gas tank (28) may be obtained by applying one or more pressure and temperature sensors of any suited type located in the respective chamber. It may be applied separate pressure sensors and separate temperature sensors, or combined pressure and temperature sensors. The measuring of the position of the piston may be obtained by applying a position sensor etc.

To be able to adjusting the equilibrium position upwards toward the first end of the length extension device (1), it is necessary to have access to a source of pressurised gas which may be transferred to the upper chamber (22) of the gas accumulator (16). Thus a need for waiting with the preparation to the reduction of the lifting force to just before the load obtains contact with the underlay the load is to be deployed onto. That is, it is advantageous that the expansion chamber (29) of the gas tank (28) contains sufficient amounts of gas under high pressure during the lift until a need for performing landing compensation by reducing the lifting force arises.

The gas under high pressure in the expansion chamber (29) of the gas tank (28) may additionally be utilised for executing a quick lift of the load (11) from its underlay in the initial phase of the lifting operation. That is, the heave compensating device assists the lifting device (7) in the initial phase of the lift to ensure a secure lifting height above the deck or other physical construction of the cargo vessel to reduce the risk of re-contact from wave motions etc.

The method according to the second aspect of the invention may advantageously, in another example embodiment, additionally comprise the following steps which are executed after step C) and before step H):

E) when a quick lift is to be executed, firstly close the gas outlet to the surroundings and thereafter open the gas outlet of the expansion chamber (29) of the gas tank (28) and allow the gas being transferred to the upper chamber (22) of the gas accumulator (16) pushes the piston (9) of the length extension device (1) upwards towards the first end of the length extension device (1), and

F) close thereafter the gas outlet (25) of the expansion chamber (29) of the gas tank (28) and the gas outlet (23) of the upper chamber (22) of the gas accumulator (16).

Alternatively, the method according to the second aspect of the invention may advantageously additionally comprise the following steps which are executed after step C) and before step E):

D) opening for gas through-flow through the gas outlet of the upper chamber (22) of the gas accumulator (16) and the gas outlet to the surroundings, and allow the weight of the load (11) to pull the piston (9) of the length extension device (1) downwards toward the second end of the length extension device (1),

The quick lift function may advantageously be initiated manually by an operator which transmits an acoustic, electric or electromagnetic signal by wire-less, wire, or by optical fibre a control and regulation unit of the heave compensation device

If a quick lift is to be performed, the term "sufficient amount of gas" involves having sufficient gas in the gas tank (28) under sufficiently high pressure to at least be able to push the piston (9) of the length extension device (1) upwards all the way up toward the first end of the length extension device (1) when the load (11) is lifted off the underlay.

The term "position sensor" as used herein, is to be understood as any mean able to determine the position of one or both pistons of the device, and feeding this information as an electric readable signal to the control unit of the device for determination of the position of the first slide-able piston in the length extension device. The position sensor may be located on any suited location in the device, included but not restricted to, in the first slide-able piston. A position sensor is advantageous, but not absolutely required; the device may in almost all cases calculate the position of the slide-able piston by determining the amount of gas in the gas accumulator (16) from the information of the pressure and temperature of the gas.

The term "pressure and temperature sensor" is in this context, any sensor able to produce an electric signal representative of the pressure and temperature in the pressure and temperature range which may arise in the different chambers of heave compensators and their environments, and which may transfer this information via electric transfer means to a signal receiving unit for further treatment. The sensor may be a combined pressure and temperature sensor, or alternatively a separate pressure sensor and a separate temperature sensor. The invention is not tied to use of any specific sensor, but may apply any known sensor able to measure the actual pressures and/or temperatures. Examples of suited sensors includes, bur are not restricted to; PTX 300 Series from GE, PTX 400 Series from GE, HYDAC ETS Series, HYDAC HDA Series, etc.

The term "valve" is in this context any valve able to cut-off and opening a conduit from zero to full through-flow of fluid in the conduit. The valve may be a shut-off valve, i.e. a valve which either is open or closed, a throttle valve which may continuously regulate the cross-section of the conduit for fluid from zero to 100 % opening, or any other type of valve. Due to the large pressure differences that may arise in heave compensators, it may be advantageously be employed a by-pass conduit with a pressure equalising valve acorss each valve in the heave compensator to be able to equalise the pressure difference gradually in a controlled manner, and thereafter opening the one or more of the respective valves for full through-flow.

An example of a heave compensating device suited for performing the method according to the first aspect of the invention is illustrated in Figure 1. The length extension device 1 shown in Figure 1 comprises a cylinder 1 having a first end 2 and an opposite second end 3. The inner space of the cylinder 1 is divided into a vacuum chamber 4 and a liquid filled chamber 5. The liquid may advantageously be glycol based liquids such as i.e. the liquid sold under the trade mark Houghto Safe 105 or 273 CTF; however, the present invention may apply any non-compressible liquid with sufficient low freezing point and high boiling point to avoid phase transformations at the pressures and temperatures that may arise in heave compensators.

The cylinder 1 according to this example embodiment, is at a first end equipped with a hook 6 for attachment to the lifting cable of the lifting device 7 (the lifting device is not shown). In the other end 3 of cylinder 1, a piston rod 8 is protruding out of the cylinder. Piston rod 8 is in one end attached to a slide-able piston 9 and has in the other end a hook 10 for releasable attachment of a load 11 by use of a load attaching cable 12 etc. Lifting cable 7, piston rod 8, and load attachment cable 12 are arranged along the centre axis of cylinder 1, such that when the slidable piston 9 changes position inside the cylinder 1, the vertical length between the suspension point 10 of the load and the suspension point of the lifting device 6 will vary, and thus compensate for heave movements during lifting of the load. The slidable piston 9 is equipped with a position sensor 19 which continuously or at regular intervals registers the position of the piston inside cylinder 1 and transfers this information to the signal receiving unit (not shown). A first pressure and temperature sensor 18 is located in the first liquid filled chamber 5 which continuously or at regular intervals register the pressure and/or temperature of the liquid in the liquid filled chamber 5, and transfers the information to the signal receiving unit.

At the other end 3 of cylinder 1 according to this example embodiment, there is a liquid outlet 13 connected to a liquid outlet 14 to a second liquid filled chamber 15 to a second cylinder 16, via a conduit 20. Cylinder 16 is a gas accumulator where the inner space is fluid tight divided by a slidable piston 21 into the second fluid filled chamber 15 and a first gas filled chamber 22. The first gas filled chamber 22 has a first gas outlet 23 equipped with a first valve 24 which may, via electric activation means (not shown), be regulated to any position from 100 % closure to full opening of conduit 23. The first gas outlet 23 is via a gas transferring device 26 which i.e. may be a gas manifold etc., connected to a second gas outlet 25. The second gas filled chamber 22 has a second pressure and temperature sensor 27 which continuously or at regular intervals registers the pressure and/or temperature of the gas in the chamber and transfers this information to the signal receiving unit.

Gas tank 28 comprises an inner expansion chamber 29 with a gas outlet 25. Gas tank 28 may advantageously be cylindrical in order to better enable storing of gas in expansion chamber 29 at high pressures, however, any design of the gas tank 28 able to withstand storing gas at up till 400 bar may be applied in the present invention. The second gas outlet 25 is equipped with a second valve 30 which may be, via electric activation means (not shown), regulated continuously to any position from 100 % closure to full opening of the second gas outlet 25. A third pressure and temperature sensor 31 is located inside expansion chamber 29, and which continuously or at regular intervals, registers the pressure and/or temperature of the gas in the expansion chamber and transfers this information to the signal receiving unit.

The gas transferring device 26 has a third gas outlet 32 leading out to the surroundings of the heave compensator. The third gas outlet 32 is equipped with a third valve 33 which may be regulated continuously to any position in order to regulate the amount of gas flowing through the third gas outlet to any position from 100 % closure to full opening of the third gas outlet by electric activation means (not shown). The third gas outlet 32 may be applied for ventilating gas from the gas accumulator 18 and/or the gas tank 28, and it may advantageously include means (not shown) for connecting the outlet to an external gas source for accumulating gas in the gas accumulator 16 and/or the gas tank 28.

An example embodiment of a suited control unit contains a set of sensors in the heave compensator measuring the pressure, temperature and positions of the piston of the length extension device (1). These comprises at least one pressure and temperature sensor located in the liquid filled chamber of each length extension device being employed in the heave compensator, at least one pressure and temperature sensor located in the first gas filled chamber of each gas accumulator being employed in the heave compensator, at least one pressure and temperature sensor located in the gas filled chamber of each gas tank being employed in the heave compensator, and at least one sensor measuring the position of the slide-able piston in at least one of the length extension devices being employed by the heave compensator. In one example embodiment of the invention, the set of sensors may additionally comprise at least one or more pressure and temperature sensor(s) measuring the pressure and temperature of the surroundings of the heave compensator. The sensors produce electric signals which are representative for the variable being measured at regular intervals or continuously, and transmit them via electric conducting means as a stream of raw data (depicted schematically with an arrow on the figure) to a analogous signal receiving unit.

The signal receiving unit receives the stream of raw data from every sensor of the heave compensator and copies them to make a duplicate stream of raw data, where one of the copied streams is passed on to a computer storage of type computer memory chip/logging module which chronically registers the incoming data stream form each sensor, and where one of the copied streams is passed on to a signal treatment unit.

The signal treatment unit processes the incoming raw data stream from each sensor connected to the signal receiving unit of the control unit to reduce the signal noise. The processed raw data from each sensor is then transferred consecutively as a stream of processed data of the pressure and temperature in the respective fluid filled chambers of the heave compensator, the position of the piston of the length extension device, and/or the pressure and temperature of the surroundings of the heave compensator to the logging module where they are logged chronologically. A similar stream of processed data is passed on to a data processing unit. This may be accomplished by the signal treatment unit described above, or by any other signal treatment unit capable of performing the same tasks.

In addition, the signal treatment unit will continuously, or alternatively at regular intervals, process the processed data or alternatively the raw data form the position sensor of the length extension device to determine the equilibrium position of the piston at the actual moment. This information will also be passed on to the logging module, which registers it chronologically and to the data processing unit which applies the information to determine the need for regulating the equilibrium position of the piston.

The data processing unit receives a stream of processed signals from every sensor which provides real time information of pressures and temperatures in the respective fluid filled chambers of the heave compensator, and eventually of its surroundings, and the equilibrium position of the piston of at least one length extension devices of the heave compensator. The data processing unit will determine, by use of a suited gas equation of state and information of the intended functionality of the heave compensator, determine the size of the gas expansion volume which should be made available and which pressure the gas should have at the actual temperature (i.e. determine the amount of gas inside the available volume) to adjust the dampening characteristics and/or adjust the equilibrium position of the piston of the length extension device. The data processing unit will thereafter sending electric guidance signals to a signal transmission unit, which via electric transmission means, is connected to one or more of the activation means on the first, second, third, and/or forth valve and eventually to the pressure compensating means across these valves. The signal transmission unit passes on the guidance signal from the data processing unit further to the respective activation mean(s) for regulation of the valve. As a consequence, gas will either flow in or out of the outlet of the respective chamber and thus that the pressure, and in some cases also the temperature, in the respective gas filled chamber(s) is changed.

The data processing unit receives, continuously or at regular intervals, information of changes in the pressure and eventually the temperature in the respective gas filled chamber(s) by way of the incoming stream of processed data from the signal treatment unit, and will continuously compare the measured pressure and temperature in the respective gas filled chamber(s) with the calculated desired pressures and temperatures. Guidance signals will be transmitted accordingly to the respective activation means for either maintaining or ending the regulation of the gas amounts and pressures in the respective gas filled cambers.

The signal transmission unit is, via electric transmission means (shown schematically as an arrow to box in the Figure), connected to every activation mean for engagement of a valve and pressure compensating valve present in the heave compensator. The activation means comprise at least one activator for the valve on the gas outlet of the gas filled chamber of each of the at least one gas accumulator being employed in the heave compensator, at least one activator for the valve on the gas outlet of the gas filled chamber of each of the at least one gas tank being employed in the heave compensator, and at least one activator for the valve on the third gas outlet (to the surroundings of the heave compensator). In example embodiments involving a by-pass conduit across one or more of the above-mentioned valves, the activation means of these pressure compensating valves are also connected, via electric transmission means, to the signal transmission unit.

At offshore lifting operations, the heave compensating device will in many cases be subject to cyclic water wave induced stretching forces making the piston to swing more or less cyclic above an equilibrium position inside the length extension device. The term "equilibrium position" as used herein, is the position that the slideable piston would attain inside the length extension device if the load is freely suspended without any movements and the lifting vessel is laying still without any type of movements that results in heave movements on the lifting device or load. For determination of the piston of the length extension device, the device according to the invention may advantageously include a signal treatment unit which filtrates away cyclic movements such as wave motions in the signal from the position of the length extension device in order to estimate the equilibrium position of the piston independently of which wave movements or other more or less stochastic movements of the piston. In practice, this may be achieved by measuring and registering the position, $S_i$, of the slide-able piston of the length extension device at a series of time moments across a pre-determined time interval, and employing these measured positions to determine the real equilibrium position, $S_0$, of the piston in this time interval as described above. The time interval may advantageously comprise two or more cycles of the wave movements the heave compensating device is exposed to.

The signal treatment unit may advantageously also include a filter which reduces/- removes signal noise in the signals from one or several of the first, second, third, and fourth pressure and temperature sensor. The signal treating unit may apply any known signal filtration technique for this purpose, such as a low-pass filter with subsequent signal calibration and thereafter a Kalman filter for finding the equilibrium position and/or to reduce signal noise. The signal treating unit would usually be located between the signal receiving unit and the data storage memory and between the signal receiving unit and the data processing unit of the control unit, for feeding these components with the estimated equilibrium position and/or "cleaned" pressure and temperature data.

## Claims

1. A method for reducing the lifting force during the lowering of a load onto an underlay by a lifting device, wherein the method comprises in successive order:

    A) utilising a heave compensating device comprising:

        - a length extension device (1) having an upper (2) and a lower (3) end and which has an upper vacuum chamber (4) and a lower liquid filled chamber (5) due to a slideable piston (9) having a piston rod (8) which stretches through the lower liquid filled chamber (5) and further out a distance through a fluid tight opening in the lower end of the length extension device (1) and ends in a releasable attachment device (10), and
- an elongated gas accumulator (16) having an upper chamber (22) and a lower liquid filled chamber (15) divided by slideable piston (21), and where the lower liquid filled chambers (5, 15) of the length extension device (1) and the gas accumulator (16) are fluidly connected to each other by a liquid transferring device (20), and where the upper chamber has a, with a first valve (24), adjustable gas outlet (23), and
- a gas tank (28) having an expansion chamber (29) fluidly connected to the upper chamber (22) of the gas accumulator (16) by a, with a second valve (30), adjustable gas outlet (25), where the gas outlet (25) of the expansion chamber (29) of the gas tank (28) is fluidly connected to the gas outlet (23) of the upper chamber (22) of the gas accumulator (16) by a gas transferring device (26), and
- a, with a third valve (33), adjustable gas outlet (32) to the environment fluidly connected to the gas transferring device (26),

B) introducing a sufficient amount of gas into the expansion chamber (29) of the gas tank (28), and introducing a sufficient amount of gas into the upper chamber (22) of the gas accumulator (16) to form a gas pressure which at least is able to obtain an intended equilibrium position of the piston (9) of the length extension device (1) when the full sensible weight of the load (11) is pulling on the piston rod (8), and thereafter closing all gas outlets (23, 25, 32) by closing the first (24), second (30) and third (33) valve,
C) attaching the upper end of the length extension device (1) to the lifting device (7) and the load (11) to the attachment device (10) of the piston rod (8),

**characterised in that**
the method additionally comprises the following step, when reducing the lifting force is to be obtained:

M) opening for gas flow through the gas transferring device (26) between the upper chamber (22) of the elongated gas accumulator (16) and the expansion chamber (29) of the gas tank (28) such that the gas pressure of these chambers (22, 29) is equalised.

2. A method according to claim 1, **characterised in that** the method further comprises the following steps which are executed after step C) and before step M): L) preparing the reduction of the lifting force by executing the following sub-steps i) to iii):

i) measuring the pressure, $p_k^{acc}$, of the gas in the upper chamber (22) of the gas accumulator (16) when the load is lifted above the underlay,
ii) setting the desired pressure, $p_{sp}^{exp}$, in the expansion chamber (29) of the gas tank (28) to

$$p_{sp}^{exp} = f \cdot p_k^{acc},$$

where $f \in\ <0,1>$, and thereafter
iii) lowering the gas pressure in the expansion chamber (29) of the gas tank (28) to the desired gas pressure, $p_{sp}^{exp}$.

3. A method according to any preceding claim, **characterised in that**

- the factor $f$ may is in one of the ranges; from 0.5 to 0.95, from 0.6 to 0.9, or from 0.7 to 0.8.

4. A method according to one claim 2 - 3, **characterised in that** the reduction of the gas pressure in the expansion chamber (29) of the gas tank (28) is obtained by continuously measuring the pressure the pressure, $p_k^{exp}$, in the expansion chamber (29) of the gas tank (28), and thereafter opening for gas trough-flow through the gas outlet (25) of the expansion chamber (29) of the gas tank (28) and further out to the environment through the gas outlet (32) to the environment, and closing both gas outlets for gas through-flow when $\left|p_{sp}^{exp} - p_k^{exp}\right| < p_{err}^{exp}$, where $p_{err}^{exp}$ is a predetermined error margin in one of the ranges; from $0.1 \cdot 10^5$ to $2 \cdot 10^5$ Pa, from $0.1 \cdot 10^5$ to $1 \cdot 10^5$ Pa, from $0.1 \cdot 10^5$ to $0.5 \cdot 10^5$ Pa.

5. A method according to one claim 2 - 4, **characterised in that** it comprises the following steps which are executed after step C) and before step L):

G) measuring the position, $S_0$, of the piston (9) of the length extension device (1),
H) measuring the pressure and temperature of the gas inside the upper chamber (22) of the gas accumulator (16), and utilise a gas equation of state and the actual equilibrium position, $S_0$, to determine the amount of gas, $m_0^{acc}$, present in the chamber,
I) determining thereafter the amount of gas, $m_{sp}^{acc}$, required in the upper chamber (22) of the gas accumulator (16) to achieve the intended equilibrium position, $S_p$, of the piston (9), and

J) if there is to much gas in the upper chamber (22) of the gas accumulator (16), discharge from the upper chamber (22) of the gas accumulator (16) until the desired amount of gas, $m_{sp}^{acc}$, is obtained, or

K) if there is to little gas in the upper chamber (22) of the gas accumulator (16), transfer gas from the expansion chamber (29) of the gas tank (28) until the desired amount of gas, $m_{sp}^{acc}$, is obtained.

6. A method according to claim 5, **characterised in that** the discharge of gas from the upper chamber (22) of the gas accumulator (16) may i.e. be obtained by the following:

- opening the gas outlet (23) to the upper chamber (22) of the gas accumulator (16) and the gas outlet (32) to the surroundings,
- continuously measuring the pressure, $p_k^{acc}$, and the temperature, $T_k^{acc}$, of the gas in the upper chamber (22) of the gas accumulator (16),
- employing these measured values, $p_k^{acc}$, and, $T_k^{acc}$, in the gas equation of state to continuously determining the amount of gas, $m_k^{acc}$, present in the upper chamber (22) of the gas accumulator (16), and for continuously determining $\Delta m_{sp} = m_k^{acc} - m_{sp}^{acc}$, and
- when $|\Delta m_{sp}| < m_{err}$ where $m_{err}$ is a predetermined error margin for amount of gas, close the gas outlet (23) to the upper chamber (22) of the gas accumulator (16 and the gas outlet (32) to the surroundings.

7. A method according to claim 5, **characterised in that** the transferring of gas to the upper chamber (22) is obtained by the following:

- opening the gas outlet (23) to the upper chamber (22) of the gas accumulator (16) and the gas outlet (25) to the expansion chamber (29) of the gas tank (28),
- continuously measuring the pressure, $p_k^{acc}$, and the temperature, $T_k^{acc}$, of the gas in the upper chamber (22) of the gas accumulator (16),
- employing these measured values, $p_k^{acc}$, and, $T_k^{acc}$, in the gas equation of state to continuously determining the amount of gas, $m_k^{acc}$, present in the upper chamber (22) of the gas accumulator (16), and for continuously determining $\Delta m_{sp} = m_k^{acc} - m_{sp}^{acc}$, and

- when $|\Delta m_{sp}| < m_{err}$, where $m_{err}$ is a predetermined error margin for amount of gas, close the gas outlet (23) to the upper chamber (22) of the gas accumulator (16) and the gas outlet (25) to expansion chamber (29) of the gas tank (28).

8. A method according to one claim 2 - 7, **characterised in that** it additionally comprises the following steps which are executed after step C) and before step H):

E) when a quick lift is to be executed, firstly close the gas outlet (32) to the surroundings and thereafter open the gas outlet (25) of the expansion chamber (29) of the gas tank (28) and allow the gas being transferred to the upper chamber (22) of the gas accumulator (16) pushes the piston (9) of the length extension device (1) upwards towards the first end (2) of the length extension device (1), and
F) close thereafter the gas outlet (25) of the expansion chamber (29) of the gas tank (28) and the gas outlet (23) of the upper chamber (22) of the gas accumulator (16).

9. A method according to claim 8, **characterised in that** it additionally comprises the following step which is executed after step C) and before step E):
D) opening for gas through-flow through the gas outlet (23) of the upper chamber (22) of the gas accumulator (16) and the gas outlet (32) to the surroundings, and allow the weight of the load (11) to pull the piston (9) of the length extension device (1) downwards toward the second end (3) of the length extension device (1).

10. A method according to any of claims 6 - 9, **characterised in that** the equilibrium position of the piston (9) of the length extension device (1) is determined by measuring and registering the position, $S_i$, of the slidable piston (9) of the length extension device (1) at a series of time moments across a pre-determined time interval, and employing these measured positions to determine the real equilibrium position, $S_0$, in this time interval by statistically filtering out the cyclic movements in the registered positions, $S_i$.

11. A method according to claim 10, **characterised in that** the time interval comprises two or more cycles of the wave movements the heave compensating device is exposed to.

12. A method according to one claim 2 - 11, **characterised in that**

- step L) additionally comprises awaiting reception of a signal to initiate the preparation of the reduction of the lifting force before executing sub-steps i) to iii), and

- step M) additionally comprises awaiting reception of a signal to execute the reduction of the lifting force before opening for gas through-flow.

13. A method according to one of claims 2 - 12, **characterised in that**

    - step G) additionally comprises awaiting reception of a signal to adjust the available stroke length before executing step G).

14. A method according to one of claims 2 - 13, **characterised in that**

    - step D) additionally comprises awaiting reception of a signal to initiate a quick lift before executing step D).

15. A method according to one of claims 2 - 14, **characterised in that** the signal to initiate the preparation of the reduction of the lifting force, the signal to execute the reduction of the lifting force, the signal to adjust the available stroke length, and the signal to initiate a quick lift, is an acoustic, electric or electromagnetic signal transferred by wire-less, wire, or by optical fibre and which is produced manually by an operator.

16. A method according to any preceding claim, **characterised in that** it additionally comprises applying a by-pass conduit with a pressure-compensating valve across the first valve (24) of the gas outlet (23) of the upper chamber (22) of the gas accumulator (16), and when it is to be opened for gas through-flow in the gas outlet (23) of the upper chamber (22) of the gas accumulator (16), the pressure-compensating valve of the by-pass conduit is opened first until the pressure difference across the first valve (24) is partly or fully compensated before opening the first valve (24).

**Patentansprüche**

1. Verfahren zum Reduzieren der Hubkraft während des Absenkens einer Last auf eine Unterlage durch eine Hebevorrichtung, wobei das Verfahren in sukzessiver Reihenfolge Folgendes umfasst:

    A) Verwenden einer Vorrichtung zur Seegangskompensation, umfassend:

      - eine Vorrichtung zur Längenausdehnung (1), die ein oberes (2) und ein unteres (3) Ende aufweist und die eine obere Vakuumkammer (4) und eine untere mit Flüssigkeit gefüllte Kammer (5) aufweist, da ein verschiebbarer Kolben (9) eine Kolbenstange (8) aufweist, die sich durch die untere mit Flüssigkeit gefüllte Kammer (5) und ferner eine Entfernung heraus durch eine flüssigkeitsabgedichtete Öffnung in dem unteren Ende der Vorrichtung zur Längenausdehnung (1) erstreckt und in einer lösbaren Anbringungsvorrichtung (10) endet, und

    - einen länglichen Gasspeicher (16), der eine obere Kammer (22) und eine untere mit Flüssigkeit gefüllte Kammer (15) aufweist, die durch einen verschiebbaren Kolben (21) getrennt sind, und wobei die unteren mit Flüssigkeit gefüllten Kammern (5, 15) der Vorrichtung zur Längenausdehnung (1) und des Gasspeichers (16) durch eine Vorrichtung zur Flüssigkeitsübertragung (20) miteinander fluidverbunden sind und wobei die obere Kammer einen mit einem ersten Ventil (24) verstellbaren Gasauslass (23) aufweist, und

    - einen Gastank (28), der eine Expansionskammer (29) aufweist, die durch einen mit einem zweiten Ventil (30) verstellbaren Gasauslass (25) mit der oberen Kammer (22) des Gasspeichers (16) fluidverbunden ist, wobei der Gasauslass (25) der Expansionskammer (29) des Gastanks (28) durch eine Vorrichtung zur Gasübertragung (26) mit dem Gasauslass (23) der oberen Kammer (22) des Gasspeichers (16) fluidverbunden ist, und

    - einen mit einem dritten Ventil (33) verstellbaren Gasauslass (32) an die Umwelt, der mit der Vorrichtung zur Gasübertragung (26) fluidverbunden ist,

B) Einführen einer ausreichenden Gasmenge in die Expansionskammer (29) des Gastanks (28) und Einführen einer ausreichenden Gasmenge in die obere Kammer (22) des Gasspeichers (16) zum Bilden eines Gasdrucks, der mindestens dazu in der Lage ist, eine beabsichtigte Gleichgewichtsposition des Kolbens (9) der Vorrichtung zur Längenausdehnung (1) zu erlangen, wenn das vollständige wahrnehmbare Gewicht der Last (11) an der Kolbenstange (8) zieht, und danach Schließen aller Gasauslässe (23, 25, 32) durch Schließen des ersten (24), zweiten (30) und dritten (33) Ventils,

C) Anbringen des oberen Endes der Vorrichtung zur Längenausdehnung (1) an der Hebevorrichtung (7) und der Last (11) an der Anbringungsvorrichtung (10) der Kolbenstange (8),

**dadurch gekennzeichnet, dass**
das Verfahren zusätzlich den folgenden Schritt umfasst, wenn das Reduzieren der Hubkraft erlangt werden soll:

M) Öffnen für Gasströmung durch die Vorrichtung zur Gasübertragung (26) zwischen der oberen Kammer (22) des länglichen Gasspeichers (16) und der Expansionskammer (29) des Gastanks (28), sodass der Gasdruck dieser Kammern (22, 29) ausgeglichen wird.

2. Verfahren nach Anspruch 1, **dadurch gekennzeichnet, dass** das Verfahren ferner die folgenden Schritte umfasst, die nach Schritt C) und vor Schritt M) ausgeführt werden:

L) Vorbereiten der Reduzierung der Hubkraft durch Ausführen der folgenden Teilschritte i) bis iii):

i) Messen des Drucks, $p_k^{acc}$, des Gases in der oberen Kammer (22) des Gasspeichers (16), wenn die Last über die Unterlage gehoben wird,
ii) Festlegen des gewünschten Drucks, $p_{sp}^{exp}$, in der Expansionskammer (29) des Gastanks (28) auf

$$p_{sp}^{exp} = f \cdot p_k^{acc}, \text{ wobei } f \in\, <0,1>,$$

und danach
iii) Absenken des Gasdrucks in der Expansionskammer (29) des Gastanks (28) auf den gewünschten Gasdruck, $p_{sp}^{exp}$.

3. Verfahren nach einem der vorhergehenden Ansprüche, **dadurch gekennzeichnet, dass**

- der Faktor *f* in einem der Bereiche von 0,5 bis 0,95, von 0,6 bis 0,9 oder von 0,7 bis 0,8 liegen kann.

4. Verfahren nach einem der Ansprüche 2-3, **dadurch gekennzeichnet, dass** die Reduzierung des Gasdrucks in der Expansionskammer (29) des Gastanks (28) durch kontinuierliches Messen des Drucks, $p_k^{exp}$, in der Expansionskammer (29) des Gastanks (28) und danach Öffnen für Gasdurchströmung durch den Gasauslass (25) der Expansionskammer (29) des Gastanks (28) und ferner heraus an die Umwelt durch den Gasauslass (32) an die Umwelt und Schließen beider Gasauslässe für Gasdurchströmung, wenn $\left| p_{sp}^{exp} - p_k^{exp} \right| < p_{err}^{exp}$, wobei $p_{err}^{exp}$ eine vorbestimmte Fehlergrenze in einem der Bereiche von 0,1·10⁵ bis 2·10⁵ Pa, von 0,1·10⁵ bis 1·10⁵ Pa, von 0,1·10⁵ bis 0,5·10⁵ Pa ist, erlangt wird.

5. Verfahren nach einem der Ansprüche 2-4, **dadurch gekennzeichnet, dass** es die folgenden Schritte umfasst, die nach Schritt C) und vor Schritt L) ausgeführt werden:

G) Messen der Position, $S_0$, des Kolbens (9) der Vorrichtung zur Längenausdehnung (1),
H) Messen des Drucks und der Temperatur des Gases innerhalb der oberen Kammer (22) des Gasspeichers (16) und Verwenden einer Gaszustandsgleichung und der tatsächlichen Gleichgewichtsposition, $S_0$, zum Bestimmen der Gasmenge, $m_0^{acc}$, die in der Kammer vorhanden ist,
I) danach Bestimmen der Gasmenge, $m_{sp}^{acc}$, die in der oberen Kammer (22) des Gasspeichers (16) erforderlich ist, um die beabsichtigte Gleichgewichtsposition, $S_p$, des Kolbens (9) zu erreichen, und
J) falls sich zu viel Gas in der oberen Kammer (22) des Gasspeichers (16) befindet, Ablassen aus der oberen Kammer (22) des Gasspeichers (16), bis die gewünschte Gasmenge, $m_{sp}^{acc}$, erlangt ist, oder
K) falls sich zu wenig Gas in der oberen Kammer (22) des Gasspeichers (16) befindet, Übertragen von Gas aus der Expansionskammer (29) des Gastanks (28), bis die gewünschte Gasmenge, $m_{sp}^{acc}$, erlangt ist.

6. Verfahren nach Anspruch 5, **dadurch gekennzeichnet, dass** das Ablassen von Gas aus der oberen Kammer (22) des Gasspeichers (16) z. B. durch Folgendes erlangt werden kann:

- Öffnen des Gasauslasses (23) zu der oberen Kammer (22) des Gasspeichers (16) und des Gasauslasses (32) an die Umgebung,
- kontinuierliches Messen des Drucks, $p_k^{acc}$, und der Temperatur, $T_k^{acc}$, des Gases in der oberen Kammer (22) des Gasspeichers (16),
- Einsetzen dieser Messwerte, $p_k^{acc}$ und $T_k^{acc}$, in der Gaszustandsgleichung zum kontinuierlichen Bestimmen der Gasmenge, $m_k^{acc}$, die in der oberen Kammer (22) des Gasspeichers (16) vorhanden ist, und zum kontinuierlichen Bestimmen von $\Delta m_{sp} = m_k^{acc} - m_{sp}^{acc}$, und
- wenn $|\Delta m_{sp}| < m_{err}$, wobei $m_{err}$ eine vorbestimmte Fehlergrenze für die Gasmenge ist, Schließen des Gasauslasses (23) zu der oberen Kammer (22) des Gasspeichers (16) und des Gasauslasses (32) an die Umgebung.

7. Verfahren nach Anspruch 5, **dadurch gekennzeichnet, dass** das Übertragen von Gas an die obere Kammer (22) durch Folgendes erlangt wird:

- Öffnen des Gasauslasses (23) zu der oberen Kammer (22) des Gasspeichers (16) und des Gasauslasses (25) zu der Expansionskammer (29) des Gastanks (28),
- kontinuierliches Messen des Drucks, $p_k^{acc}$, und der Temperatur, $T_k^{acc}$, des Gases in der oberen Kammer (22) des Gasspeichers (16),
- Einsetzen dieser Messwerte, $p_k^{acc}$ und $T_k^{acc}$, in der Gaszustandsgleichung zum kontinuierlichen Bestimmen der Gasmenge, $m_k^{acc}$, die in der oberen Kammer (22) des Gasspeichers (16) vorhanden ist, und zum kontinuierlichen Bestimmen von $\Delta m_{sp} = m_k^{acc} - m_{sp}^{acc}$, und
- wenn $|\Delta m_{sp}| < m_{err}$, wobei $m_{err}$ eine vorbestimmte Fehlergrenze für die Gasmenge ist, Schließen des Gasauslasses (23) zu der oberen Kammer (22) des Gasspeichers (16) und des Gasauslasses (25) zu der Expansionskammer (29) des Gastanks (28).

8. Verfahren nach einem der Ansprüche 2-7, **dadurch gekennzeichnet, dass** es zusätzlich die folgenden Schritte umfasst, die nach Schritt C) und vor Schritt H) ausgeführt werden:

E) wenn ein schneller Hub ausgeführt werden soll, zuerst Schließen des Gasauslasses (32) an die Umgebung und danach Öffnen des Gasauslasses (25) zu der Expansionskammer (29) des Gastanks (28) und Ermöglichen, dass das Gas, das an die obere Kammer (22) des Gasspeichers (16) übertragen wird, den Kolben (9) der Vorrichtung zur Längenausdehnung (1) nach oben in Richtung des ersten Endes (2) der Vorrichtung zur Längenausdehnung (1) drückt, und
F) danach Schließen des Gasauslasses (25) der Expansionskammer (29) des Gastanks (28) und des Gasauslasses (23) der oberen Kammer (22) des Gasspeichers (16).

9. Verfahren nach Anspruch 8, **dadurch gekennzeichnet, dass** es zusätzlich den folgenden Schritt umfasst, der nach Schritt C) und vor Schritt E) ausgeführt wird:

D) Öffnen für Gasdurchströmung durch den Gasauslass (23) der oberen Kammer (22) des Gasspeichers (16) und den Gasauslass (32) an die Umgebung und Ermöglichen, dass das Gewicht der Last (11) den Kolben (9) der Vorrichtung zur Längenausdehnung (1) nach unten in Richtung des zweiten Endes (3) der Vorrichtung zur Längenausdehnung (1) zieht.

10. Verfahren nach einem der Ansprüche 6-9, **dadurch gekennzeichnet, dass** die Gleichgewichtsposition des Kolbens (9) der Vorrichtung zur Längenausdehnung (1) durch Messen und Registrieren der Position, $S_i$, des verschiebbaren Kolbens (9) der Vorrichtung zur Längenausdehnung (1) zu einer Reihe von Zeitpunkten über ein vorbestimmtes Zeitintervall und Einsetzen dieser gemessenen Positionen zum Bestimmen der tatsächlichen Gleichgewichtsposition, $S_0$, in diesem Zeitintervall durch statistisches Herausfiltern der zyklischen Bewegungen in den registrierten Positionen, $S_i$, bestimmt wird.

11. Verfahren nach Anspruch 10, **dadurch gekennzeichnet, dass** das Zeitintervall zwei oder mehr Zyklen der Wellenbewegungen umfasst, denen die Vorrichtung zur Seegangskompensation ausgesetzt ist.

12. Verfahren nach einem der Ansprüche 2-11, **dadurch gekennzeichnet, dass**

- Schritt L) zusätzlich Warten auf den Empfang eines Signals zum Einleiten der Vorbereitung der Reduzierung der Hubkraft vor dem Ausführen von Teilschritt i) bis iii) umfasst, und
- Schritt M) zusätzlich Warten auf den Empfang eines Signals zum Ausführen der Reduzierung der Hubkraft vor dem Öffnen für Gasdurchströmung umfasst.

13. Verfahren nach einem der Ansprüche 2-12, **dadurch gekennzeichnet, dass**

- Schritt G) zusätzlich Warten auf den Empfang eines Signals zum Verstellen der verfügbaren Kolbenhublänge vor dem Ausführen von Schritt G) umfasst.

14. Verfahren nach einem der Ansprüche 2-13, **dadurch gekennzeichnet, dass**

- Schritt D) zusätzlich Warten auf den Empfang eines Signals zum Einleiten eines schnellen Hubs vor dem Ausführen von Schritt D) umfasst.

15. Verfahren nach einem der Ansprüche 2-14, **dadurch gekennzeichnet, dass** das Signal zum Einleiten der Vorbereitung der Reduzierung der Hubkraft, das Signal zum Ausführen der Reduzierung der Hubkraft, das Signal zum Verstellen der verfügbaren Kolbenhublänge und das Signal zum Einleiten eines schnellen Hubs ein akustisches, elektrisches oder elektromagnetisches Signal ist, das drahtlos, drahtgebunden oder durch Lichtwellenleiter übertragen wird und das manuell durch einen Bediener erzeugt wird.

16. Verfahren nach einem der vorhergehenden Ansprüche, **dadurch gekennzeichnet, dass** es zusätzlich Anwenden einer Umgehungsleitung mit einem Druckausgleichsventil an dem ersten Ventil (24) des Gasauslasses (23) der oberen Kammer (22) des Gasspeichers (16) umfasst, und wenn es für Gasdurchströmung in den Gasauslass (23) der oberen Kammer (22) des Gasspeichers (16) geöffnet werden soll, wird zuerst das Druckausgleichsventil der Umgehungsleitung geöffnet, bis der Druckunterschied an dem ersten Ventil (24) teilweise oder vollständig ausgeglichen ist, ehe das erste Ventil (24) geöffnet wird.

## Revendications

1. Procédé permettant de réduire la force de levage pendant la descente d'une charge sur un support par un dispositif de levage, dans lequel le procédé consiste, dans un ordre chronologique, à :

   A) utiliser un dispositif de compensation de tangage comprenant :

   - un dispositif d'extension de longueur (1) comportant une extrémité supérieure (2) et une extrémité inférieure (3) et qui comporte une chambre à vide supérieure (4) et une chambre inférieure remplie de liquide (5) en raison d'un piston coulissant (9) ayant une tige de piston (8) qui s'étend à travers la chambre inférieure remplie de liquide (5) et ensuite sur une certaine distance à travers une ouverture étanche aux fluides dans l'extrémité inférieure du dispositif d'extension de longueur (1) et se termine par un dispositif de fixation amovible (10), et
   - un accumulateur de gaz allongé (16) comportant une chambre supérieure (22) et une chambre inférieure remplie de liquide (15) divisée par un piston coulissant (21), et où les chambres inférieures remplies de liquide (5, 15) du dispositif d'extension de longueur (1) et de l'accumulateur de gaz (16) sont reliées fluidiquement entre elles par un dispositif de transfert de liquide (20), et où la chambre supérieure comporte une sortie de gaz (23) réglable avec une première vanne (24), et

   - un réservoir de gaz (28) comportant une chambre d'expansion (29) reliée fluidiquement à la chambre supérieure (22) de l'accumulateur de gaz (16) par une sortie de gaz (25) réglable avec une deuxième vanne (30), où la sortie de gaz (25) de la chambre d'expansion (29) du réservoir de gaz (28) est reliée fluidiquement à la sortie de gaz (23) de la chambre supérieure (22) de l'accumulateur de gaz (16) par un dispositif de transfert de gaz (26), et
   - une sortie de gaz (32) vers le milieu environnant, réglable avec une troisième vanne (33) et reliée fluidiquement au dispositif de transfert de gaz (26),

   B) introduire une quantité suffisante de gaz dans la chambre d'expansion (29) du réservoir de gaz (28), et introduire une quantité suffisante de gaz dans la chambre supérieure (22) de l'accumulateur de gaz (16) pour former une pression de gaz qui permette au moins d'obtenir une position d'équilibre prévue du piston (9) du dispositif d'extension de longueur (1) lorsque le poids total de la charge (11) tire sur la tige de piston (8), et fermer ensuite toutes les sorties de gaz (23, 25, 32) en fermant la première (24), la deuxième (30) et la troisième vanne (33),

   C) fixer l'extrémité supérieure du dispositif d'extension de longueur (1) au dispositif de levage (7) et la charge (11) au dispositif de fixation (10) de la tige de piston (8),

   **caractérisé en ce que**
   le procédé comprend en outre l'étape suivante, lorsqu'il faut obtenir une réduction de la force de levage :

   M) ouvrir pour permettre l'écoulement de gaz à travers le dispositif de transfert de gaz (26) entre la chambre supérieure (22) de l'accumulateur de gaz allongé (16) et la chambre d'expansion (29) du réservoir de gaz (28) de manière à égaliser la pression de gaz de ces chambres (22, 29).

2. Procédé selon la revendication 1, **caractérisé en ce que** le procédé comprend en outre les étapes suivantes qui sont exécutées après l'étape C) et avant l'étape M) :

   L) préparer la réduction de la force de levage en exécutant les sous-étapes i) à iii) suivantes :

   i) mesurer la pression, $p_k^{acc}$, du gaz dans la chambre supérieure (22) de l'accumulateur de gaz (16) lorsque la charge est soulevée au-dessus du support,

   ii) régler la pression souhaitée, $p_{sp}^{exp}$, dans la chambre d'expansion (29) du réservoir de gaz (28) sur

$$p_{sp}^{\exp} = f \cdot p_k^{acc}, \quad ,$$

où $f \in$ <0,1> $f \in$ < 0,1 >, et ensuite
iii) diminuer la pression de gaz dans la chambre d'expansion (29) du réservoir de gaz (28) jusqu'à la pression de gaz souhaitée, $p_{sp}^{\exp}$.

3. Procédé selon l'une quelconque des revendications précédentes, **caractérisé en ce que**

   - le facteur f peut se trouver dans l'une des plages suivantes : de 0,5 à 0,95, de 0,6 à 0,9 ou de 0,7 à 0,8.

4. Procédé selon l'une des revendications 2 et 3, **caractérisé en ce que** la réduction de la pression de gaz dans la chambre d'expansion (29) du réservoir de gaz (28) s'obtient en mesurant en continu la pression, $p_{sp}^{\exp}$, dans la chambre d'expansion (29) du réservoir de gaz (28), et ensuite en ouvrant pour permettre l'écoulement de gaz à travers la sortie de gaz (25) de la chambre d'expansion (29) du réservoir de gaz (28) et ensuite vers le milieu environnant à travers la sortie de gaz (32) vers le milieu environnant, et en fermant les deux sorties de gaz pour l'écoulement de gaz lorsque

$$\left| p_{sp}^{\exp} - p_k^{\exp} \right| < p_{err}^{\exp},$$

où $p_{err}^{\exp}$ est une marge d'erreur prédéterminée dans l'une des plages suivantes : de $0,1 \cdot 10^5$ à $2 \cdot 10^5$ Pa, de $0,1 \cdot 10^5$ à $1 \cdot 10^5$ Pa, de $0,1 \cdot 10^5$ à $0,5 \cdot 10^5$ Pa.

5. Procédé selon l'une des revendications 2 à 4, **caractérisé en ce qu'**il comprend les étapes suivantes qui sont exécutées après l'étape C) et avant l'étape L) :

   G) mesurer la position, $S_0$, du piston (9) du dispositif d'extension de longueur (1),
   H) mesurer la pression et la température du gaz à l'intérieur de la chambre supérieure (22) de l'accumulateur de gaz (16), et utiliser une équation d'état des gaz et la position d'équilibre réelle, $S_0$, pour déterminer la quantité de gaz, $m_0^{acc}$, présent dans la chambre,
   I) déterminer ensuite la quantité de gaz, $m_{sp}^{acc}$, nécessaire dans la chambre supérieure (22) de l'accumulateur de gaz (16) pour obtenir la position d'équilibre prévue, $S_p$, du piston (9), et
   J) s'il y a trop de gaz dans la chambre supérieure (22), en refouler depuis la chambre supérieure (22) de l'accumulateur de gaz (16) jusqu'à obtenir la quantité de gaz souhaitée, $m_{sp}^{acc}$, ou
   K) s'il n'y a pas assez de gaz dans la chambre supérieure (22) de l'accumulateur de gaz (16), transférer du gaz depuis la chambre d'expansion (29) du réservoir de gaz (28) jusqu'à obtenir la quantité de gaz souhaitée, $m_{sp}^{acc}$.

6. Procédé selon la revendication 5, **caractérisé en ce que** le refoulement de gaz depuis la chambre supérieure (22) de l'accumulateur de gaz (16) peut s'obtenir par les opérations suivantes :

   - en ouvrant la sortie de gaz (23) vers la chambre supérieure (22) de l'accumulateur de gaz (16) et la sortie de gaz (32) vers l'extérieur,
   - mesurer en continu la pression, $p_k^{acc}$, et la température, $T_k^{acc}$, du gaz dans la chambre supérieure (22) de l'accumulateur de gaz (16),
   - employer ces valeurs mesurées, $p_k^{acc}$ et $T_k^{acc}$, dans l'équation d'état des gaz pour déterminer en continu la quantité de gaz, $m_k^{acc}$, présent dans la chambre supérieure (22) de l'accumulateur de gaz (16), et pour déterminer en continu

$$\Delta m_{sp} = m_k^{acc} - m_{sp}^{acc},$$

et
   - lorsque $|\Delta m_{sp} < m_{err}|$, où $m_{err}$ est une marge d'erreur prédéterminée pour la quantité de gaz, fermer la sortie de gaz (23) vers la chambre supérieure (22) de l'accumulateur de gaz (16) et la sortie de gaz (32) vers l'extérieur.

7. Procédé selon la revendication 5, **caractérisé en ce que** le transfert de gaz vers la chambre supérieure (22) s'obtient par les opérations suivantes :

   - en ouvrant la sortie de gaz (23) vers la chambre supérieure (22) de l'accumulateur de gaz (16) et la sortie de gaz (25) vers la chambre d'expansion (29) du réservoir de gaz (28),
   - en mesurant en continu la pression, $p_k^{acc}$, et la température, $T_k^{acc}$, du gaz dans la chambre supérieure (22) de l'accumulateur de gaz (16),
   - en employant ces valeurs mesurées, $p_k^{acc}$ et

$T_k^{acc}$ **,** dans l'équation d'état des gaz pour déterminer en continu la quantité de gaz, $m_k^{acc}$ **,** présent dans la chambre supérieure (22) de l'accumulateur de gaz (16) et pour déterminer en continu

$$\Delta m_{sp} = m_k^{acc} - m_{sp}^{acc} \text{ ,}$$

et

- lorsque $|\Delta m_{sp} < m_{err}|$, où $m_{err}$ est une marge d'erreur prédéterminée pour la quantité de gaz, fermer la sortie de gaz (23) vers la chambre supérieure (22) de l'accumulateur de gaz (16) et la sortie de gaz (25) vers la chambre d'expansion (29) du réservoir de gaz (28).

8. Procédé selon l'une des revendications 2 à 7, **caractérisé en ce qu'**il comprend en outre les étapes suivantes qui sont exécutées après l'étape C) et avant l'étape H) :

   E) lorsqu'il faut exécuter un levage rapide, d'abord, commencer par fermer la sortie de gaz (32) vers l'extérieur et ouvrir ensuite la sortie de gaz (25) de la chambre d'expansion (29) du réservoir de gaz (28) et laisser le gaz transféré vers la chambre supérieure (22) de l'accumulateur de gaz (16) pousser le piston (9) du dispositif d'extension de longueur (1) vers le haut en direction de la première extrémité (2) du dispositif d'extension de longueur (1), et
   F) fermer ensuite la sortie de gaz (25) de la chambre d'expansion (29) du réservoir de gaz (28) et la sortie de gaz (23) de la chambre supérieure (22) de l'accumulateur de gaz (16).

9. Procédé selon la revendication 8, **caractérisé en ce qu'**il comprend en outre l'étape suivante qui est exécutée après l'étape C) et avant l'étape E) :

   D) ouvrir pour permettre l'écoulement de gaz à travers la sortie de gaz (23) de la chambre supérieure (22) de l'accumulateur de gaz (16) et la sortie de gaz (32) vers l'extérieur, et laisser le poids de la charge (11) tirer le piston (9) du dispositif d'extension de longueur (1) vers le bas en direction de la seconde extrémité (3) du dispositif d'extension de longueur (1).

10. Procédé selon l'une des revendications 6 à 9, **caractérisé en ce que** l'on détermine la position d'équilibre du piston (9) du dispositif d'extension de longueur (1) en mesurant et en enregistrant la position, $S_i$, du piston coulissant (9) du dispositif d'extension de longueur (1) à une série de moments tout au long d'un intervalle de temps prédéterminé, et en employant ces positions mesurées pour déterminer la position d'équilibre réelle, $S_0$, dans cet intervalle de temps en éliminant statistiquement par filtrage les mouvements cycliques dans les positions enregistrées, $S_i$.

11. Procédé selon la revendication 10, **caractérisé en ce que** l'intervalle de temps comprend deux cycles ou plus des mouvements ondulatoires auxquels est exposé le dispositif de compensation de tangage.

12. Procédé selon l'une des revendications 2 à 11, **caractérisé en ce que**

    - l'étape L) comporte en outre l'attente de la réception d'un signal pour entamer la préparation de la réduction de la force de levage avant d'exécuter les sous-étapes i) à iii), et
    - l'étape M) comporte en outre l'attente de la réception d'un signal pour exécuter la réduction de la force de levage avant d'ouvrir pour permettre l'écoulement de gaz.

13. Procédé selon l'une des revendications 2 à 12, **caractérisé en ce que**

    - l'étape G) comporte en outre l'attente de la réception d'un signal pour régler la course disponible avant d'exécuter l'étape G).

14. Procédé selon l'une des revendications 2 à 13, **caractérisé en ce que**

    - l'étape D) comporte en outre l'attente de la réception d'un signal pour entamer un levage rapide avant d'exécuter l'étape D).

15. Procédé selon l'une des revendications 2 à 14, **caractérisé en ce que** le signal pour entamer la préparation de la réduction de la force de levage, le signal pour exécuter la réduction de la force de levage, le signal pour régler la course disponible, et le signal pour entamer un levage rapide, est un signal acoustique, électrique ou électromagnétique transféré par voie non filaire, filaire, ou par fibre optique et qui est produit manuellement par un opérateur.

16. Procédé selon l'une quelconque des revendications précédentes, **caractérisé en ce qu'**il comporte en outre l'application d'un conduit de dérivation avec une vanne de compensation de pression à travers la première vanne (24) de la sortie de gaz (23) de la chambre supérieure (22) de l'accumulateur de gaz (16), et lorsqu'il faut l'ouvrir pour laisser le gaz s'écouler dans la sortie de gaz (23) de la chambre supérieure (22) de l'accumulateur de gaz (16), on commence par ouvrir la vanne de compensation de

**EP 2 982 637 B1**

pression du conduit de dérivation jusqu'à ce que la différence de pression à travers la première vanne (24) ait été partiellement ou totalement compensée avant d'ouvrir la première vanne (24).

Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3785445 A
- US 3793835 A

- US 3842603 A